(19) Europäisches Patentamt
European Patent Office
Office européen des brevets

(11) EP 3 296 735 B1

(12) # EUROPEAN PATENT SPECIFICATION

(45) Date of publication and mention of the grant of the patent:
**16.02.2022 Bulletin 2022/07**

(21) Application number: **16792807.6**

(22) Date of filing: **16.05.2016**

(51) International Patent Classification (IPC):
***B01J 20/29*** *(2006.01)* ***B01J 20/286*** *(2006.01)*
***B01J 20/32*** *(2006.01)* ***C07B 57/00*** *(2006.01)*

(52) Cooperative Patent Classification (CPC):
**B01J 20/281; B01J 20/286; B01J 20/29; B01J 20/328; C07B 57/00; G01N 30/88**

(86) International application number:
**PCT/JP2016/064447**

(87) International publication number:
**WO 2016/182083 (17.11.2016 Gazette 2016/46)**

(54) **SEPARATING AGENT FOR OPTICAL ISOMERS**

TRENNMITTEL FÜR OPTISCHE ISOMERE

AGENT DE SÉPARATION POUR ISOMÈRES OPTIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.05.2015 CN 201510245550**

(43) Date of publication of application:
**21.03.2018 Bulletin 2018/12**

(73) Proprietor: **Daicel Corporation**
**Osaka-shi, Osaka 530-0011 (JP)**

(72) Inventors:
- **SHEN, Jun**
  **Harbin**
  **Heilongjiang 150001 (CN)**
- **LI, Qiang**
  **Harbin**
  **Heilongjiang 150001 (CN)**
- **LI, Geng**
  **Harbin**
  **Heilongjiang 150001 (CN)**
- **OKAMOTO, Yoshio**
  **Harbin**
  **Heilongjiang 150001 (CN)**

(74) Representative: **Grünecker Patent- und Rechtsanwälte**
**PartG mbB**
**Leopoldstraße 4**
**80802 München (DE)**

(56) References cited:
**EP-A1- 1 331 214**
**EP-A1- 1 623 976**
**WO-A1-2006/053766**
**WO-A1-2008/102920**
**WO-A2-2015/004686**
**JP-A- H0 381 262**
**JP-A- H03 181 433**
**JP-B2- 3 148 032**
**US-A- 5 965 026**

- **YOSHIO OKAMOTO ET AL.: 'Chromatographic optical resolution using polysaccharide derivatives with chiral substituents as stationary phases' POLYMER PREPRINTS vol. 38, no. 7, 12 September 1989, JAPAN, pages 2015 - 2017, XP009502522**
- **SHEN JUN ET AL.: 'Synthesis and Immobilization of Amylose Derivatives Bearing a 4-tert-Butylbenzoate Group at the 2-Position and 3,5-Dichlorophenylcarbamate/3-(Triethoxysilyl) propylcarbamate Groups at 3- and 6-Positions as Chiral Packing Material for HPLC' CHEM LETT vol. 39, no. 5, 31 March 2010, pages 442 - 444, XP055436337**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- LI GENG ET AL.: 'Synthesis and Enantioseparation Ability of Xylan Bisphenylcarbamate Derivatives as Chiral Stationary Phases in HPLC' CHIRALITY vol. 27, no. 8, 03 June 2015, pages 518 - 522, XP055436359

## Description

[Technical Field]

The present invention relates to a separating agent for optical isomers, and specifically relates to a separating agent for optical isomers, which has a structure in which hydroxyl groups in xylan are substituted with carbamate derivatives having specific structures.

[Background Art]

Optical isomers are used as medicines and raw materials thereof. In such applications that act on living bodies, it is common for only one optical isomer to be used, and extremely high optical purity is required. As methods for producing optical isomers requiring such high optical purity, known methods involve separating one optical isomer from a mixture of optical isomers such as a racemate, by using a column containing a separating agent for optical isomers which has optical resolution capability in a chromatographic method such as liquid chromatography, simulated moving bed chromatography or supercritical fluid chromatography.

It is possible to use polymers having optically active sites as separating agents for optical isomers. This type of separating agent for optical isomers is generally constituted from a carrier such as silica gel and a polymer supported on the surface of the carrier, and is generally housed in a column and used to effect optical resolution.

Polysaccharides and polysaccharide derivatives in which hydroxyl groups in polysaccharides are substituted with alkyl-substituted phenyl carbamates were known in the past as polymers having optically active sites (see Patent Document 1).

Substances in which cellulose, amylose or chitosan are used as the polysaccharide are known. Patent document 2 discloses a separating agent for optical isomers comprising a carrier and substituted phenyl carbamate derivatives of an amylose or cellulose immobilized on said carrier wherein the substituted phenyl carbamate is a 3-chlorophenylcarbamate or a 3-chloro-4-methylphenylcarbamate. Patent document 3 discloses a separating agent for optical isomers comprising a carrier and 3-methyl-4-chlorophenyl carbamate or 3-chloro-4-methylphenylcarbamate derivative of cellulose supported on said carrier. Patent document 4 discloses a separating agent for optical isomers comprising a carrier and 4-tert-butylphenyl carbamate or 3,5-dichlorophenylcarbamate derivatives of xylan supported on said carrier. Meanwhile, use of derivates in which xylan is used as a

Meanwhile, use of derivatives in which xylan is used as a polysaccharide and hydroxyl groups in the xylan are substituted with 3,5-dimethylphenyl carbamate or 3,5-dichlorophenyl carbamate as separating agents for optical isomers is known (see Non Patent Document 1).

[Citation List]

[Patent Document]

[Patent Document 1] Japanese Patent Application Publication No. S63-178101.

[Patent document 2] WO2015/004686

[Patent document 3] JP 3 148032B2

[Patent document 4] JP H03 81262A

[Non Patent Document]

[Non Patent Document 1] Y. Okamoto et al., Reactive & Functional Polymers 37 (1998) 183-188

[Summary of Invention]

[Technical Problem]

In the separating aqent for optical isomers disclosed in Non Patent Document 1, only 3,5-dimethylphenyl carbamate and 3,5-dichlorophenyl carbamate are used as phenyl carbamates, and no investigations were carried out

for cases involving the use of polymers in which phenyl groups are substituted with other substituent groups as phenyl carbamate groups that substitute hydroxyl groups in xylan.

As a result, the present invention addresses the problem of providing a separating agent for optical isomers, which is constituted from a carrier and a novel xylan-phenyl carbamate derivative obtained by substituting hydroxyl groups in the xylan with phenyl carbamate groups having substituent groups that are different from phenyl carbamate groups having the substituent groups mentioned above.

[Solution to Problem]

As a result of diligent research into how to solve this problem, the inventors of the present invention found that a xylan derivative obtained by substituting hydroxyl group in the xylan with phenyl carbamate groups having substituent groups different from those in 3,5-dimethylphenyl carbamate and 3, 5-dichlorophenyl carbamate exhibited better optical resolution performance against specific racemates than conventional xylan-3,5-dimethylphenyl carbamate derivatives and xylan-3,5-dichlorophenyl carbamate derivatives, which has not heretofore been known.

That is, the present invention is set out in the appended claims 1 to 6 as follows:

[1] A separating agent for optical isomers, which is constituted from a carrier and a xylan-phenyl carbamate derivative in which hydroxyl groups in the xylan are substituted with groups represented

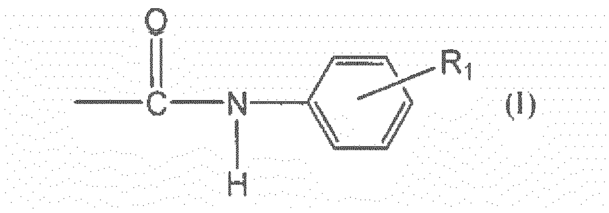

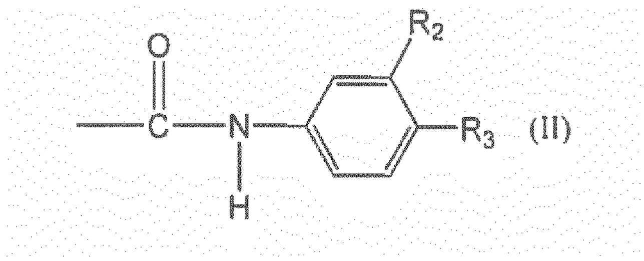

(in formula (I), $R_1$ is a halogen or an alkyl group having 1 to 5 carbon atoms, and the $R_1$ substitution position is a meta position ; in formula (II), $R_2$ and $R_3$ are each independently a halogen or an alkyl group having 1 to 5 carbon atoms, and $R_2$ and $R_3$ are different from each other.)

[2] The separating agent for optical isomers according to [1], wherein the groups that substitute the hydroxyl groups in the xylan are groups represented by formula (I), and $R_1$ is an alkyl group having 1 to 5 carbon atoms.

[3] The separating agent for optical isomers according to [2], wherein 1 $R_1$ is a methyl group or an ethyl group.

[4] The separating agent for optical isomers according to [1], wherein the groups that substitute the hydroxyl groups in the xylan are groups represented by formula (II), and in formula (II), $R_2$ is wherein $R_2$ is chlorine and $R_3$ is a methyl group or an ethyl group.

[6] The separating agent for optical isomers according to any one of [1] to [5], wherein the carrier is silica gel.

[Advantageous Effects of Invention]

According to the present invention, it is possible to provide a separating agent for optical isomers, which exhibits good separative ability for specific racemates.

[Brief Description of Drawings]

[Fig. 1]

Fig. 1 is a diagram that shows a $^{1}H$-NMR spectrum of a xylan-3-methylphenyl carbamate derivative at 80°C in DMSO-$d_6$.
[Fig. 2]
Fig. 2 is a diagram that shows a chromatogram obtained by separating a specific racemate using the separating agent for optical isomers produced in Example 1.
[Fig. 3]
Fig. 3 is a diagram that shows chromatograms obtained by separating a specific racemate using the separating agents for optical isomers produced in Examples 2 and 4 and Comparative Example 3.

[Description of Embodiments]

The separating agent for optical isomers of the present invention is constituted from a carrier and a xylan-phenyl carbamate derivative in which hydroxyl groups in the xylan are substituted with groups represented by formula (I) or formula (II) below.
[C2]

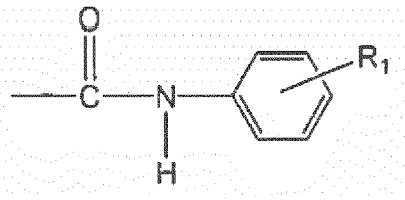
(I)

(In formula (I), $R_1$ is a halogen or an alkyl group having 1 to 5 carbon atoms, and the $R_1$ substitution position is a meta position.)
[C3]

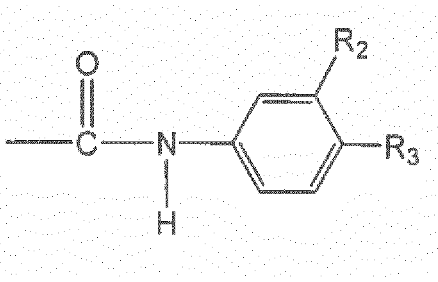
(II)

(In formula (II), $R_2$ and $R_3$ are each independently a halogen or an alkyl group having 1 to 5 carbon atoms, and $R_2$ and $R_3$ are different from each other.)
The xylan used in the present invention may be β-1, 4-xylan, P-1,3-xylan, or a mixture of these.
The average degree of polymerization of the xylan (the average number of pyranose rings in 1 molecule of xylan) is preferably 5 or more, and more preferably 10 or more, with no particular upper limit, but this average degree of polymerization is preferably 1000 or less from the perspective of ease of handling, and is more preferably 5 to 1000, further preferably 10 to 1000, and particularly preferably 10 to 500.
In the xylan-phenyl carbamate derivative, some of the hydroxyl groups in the xylan may be unreacted, and may be substituted with another substituent group as long as the advantageous effect of the present invention is not impaired. A mode in which such hydroxyl groups account for approximately 20% or less of all the hydroxyl groups can be given as an example.
A method such as that described below can be given as an example of a method of substituting hydrogen atoms in hydroxyl groups in xylan with substituted phenyl carbamate groups represented by formula (I) or formula (II).
A phenylisocyanate compound in which a hydrogen atom on the aromatic ring is substituted with $R_1$, as shown in formula (I) above, or a phenylisocyanate compound substituted with $R_2$ and $R_3$, as shown in formula (II) above, is dissolved in an amide-based solvent, such as N,N-dimethylacetamide, N-methyl-2-pyrrolidone or 1,3-dimethyl-2-imidazolidinone, in which lithium chloride is dissolved, xylan is added to this solution, and a reaction is brought about at an appropriate temperature for an appropriate duration (20 to 100°C, 1 to 24 hours), thereby causing the isocyanate group in the phenylisocyanate compound to react with a hydroxyl group in the xylan.
In addition to the amide-based solvent, pyridine, for example, can be used at the same time.

In formula (I) above, chlorine, bromine or fluorine can be used as the halogen, and chlorine is preferred. In addition, a methyl group or an ethyl group is preferred as the alkyl group having 1 to 5 carbon atoms.

In addition, $R_1$ is positioned at a meta position. The meta position is advantageous in terms of optical resolution of specific optical isomers.

In addition, it is preferable for $R_1$ to be an alkyl group having 1 to 5 carbon atoms from the perspective of excellent optical resolution of specific optical isomers.

In formula (II), chlorine, bromine or fluorine can be used as the halogen, and chlorine is preferred. In addition, a methyl group or an ethyl group is preferred as the alkyl group having 1 to 5 carbon atoms.

$R_2$ and $R_3$ are different from each other, and in cases where one of $R_2$ or $R_3$ is a halogen, it is preferable for the other of $R_2$ or $R_3$ to be an alkyl group having 1 to 5 carbon atoms from the perspective of excellent optical resolution of specific optical isomers.

Specifically, it is preferable for chlorine to be substituted as a halogen in one of $R_2$ or $R_3$ and for a methyl group or an ethyl group to be substituted as a group that is not a halogen. For example, $R_2$ is preferably a halogen, and more preferably chlorine. In addition, $R_3$ is preferably an alkyl group having 1 to 5 carbon atoms, and more preferably a methyl group.

Examples of carriers used to support the xylan derivative include porous organic carriers and porous inorganic carriers, with porous inorganic carriers being preferred. Suitable porous organic carriers include polymeric substances selected from among polystyrene, poly(meth)acrylamide, poly(meth)acrylates, or the like and suitable porous inorganic carriers include silica gel, alumina, zirconia, titania, magnesia, glass, kaolin, titanium oxide, silicate, hydroxyapatite, or the like. Preferred carriers are silica gel, alumina and glass.

It is possible to suppress excessive adsorption of a substance to be separated on the carrier by subjecting the carrier to a surface treatment. Examples of surface treatment agents include silane coupling agents such as aminopropylsilane and titanate-based and aluminate-based coupling agents.

The average particle diameter of a carrier able to be used in the present invention is generally 0.1 to 1000 μm, and preferably 1 to 50 μm. The average pore diameter of the carrier is generally 10 to 10000 Å, and preferably 50 to 1000 Å.

In addition, the specific surface area of the carrier is generally 5 to 1000 $m^2/g$, and preferably 10 to 500 $m^2/g$.

The average particle diameter of the separating agent for optical isomers of the present invention can be measured using an apparatus in which measurements are carried out using microscope images, such as a Mastersizer 2000E available from Malvern Instruments Ltd.

In the separating agent for optical isomers of the present invention, the quantity of the xylan-phenyl carbamate derivative supported on the carrier can be 1 to 100 wt. %, and preferably 5 to 50 wt. %, relative to the carrier.

This supported quantity can be determined by means of thermogravimetric analysis.

The method for supporting the xylan-phenyl carbamate derivative on the carrier may be a chemical method or a physical method. Examples of physical methods include a method of dissolving the xylan-phenyl carbamate derivative in a solvent capable of dissolving same, mixing thoroughly with the carrier, and then removing the solvent by means of reduced pressure, heating or an air stream, and a method of dissolving the xylan-phenyl carbamate derivative in a solvent capable of dissolving same, mixing thoroughly with the carrier, and then dispersing in a solvent in which the xylan-phenyl carbamate derivative is insoluble so as to diffuse the solvent in which the xylan-phenyl carbamate derivative is soluble. A separating agent obtained in this way may be subjected to a suitable treatment, such as heating, addition of a solvent or washing, so as to improve separation performance.

The separating agent for optical isomers of the present invention can be packed in a column having a publicly known size by means of a publicly known method, and used as an HPLC column.

When separating optical isomers by means of HPLC using a column packed with the separating agent for optical isomers of the present invention, the HPLC flow rate may be adjusted as appropriate, and an example thereof is 0.1 to 5 mL/min.

In addition to HPLC, the separating agent for optical isomers of the present invention can be used as a filler for a capillary column for gas chromatography or electrophoresis, and especially for capillary electrochromatography (CEC), CZE (capillary zone electrophoresis) and MEKC (micellar electrokinetic chromatography) .

## Examples

The present invention will now be explained in greater detail through the use of examples. However, the present invention is not limited to the examples given below.

### <Example 1>

A pre-treatment was carried out by dispersing xylan derived from beech wood (available from Sigma-Aldrich) in water at 60°C and recovering xylan as an acetone-insoluble fraction.

Xylan-phenyl carbamate derivative (a), into which meta-methylphenyl carbamate groups represented by formula (1) below were introduced, was obtained by reacting the pre-treated xylan with an excess of phenylisocyanate in which the meta position was substituted with a methyl group in a solution (dimethylacetamide, lithium chloride, dry pyridine) at 80°C according to the reaction formula shown below, so as to convert hydroxyl groups in the xylan into carbamoyl groups.

[C4]

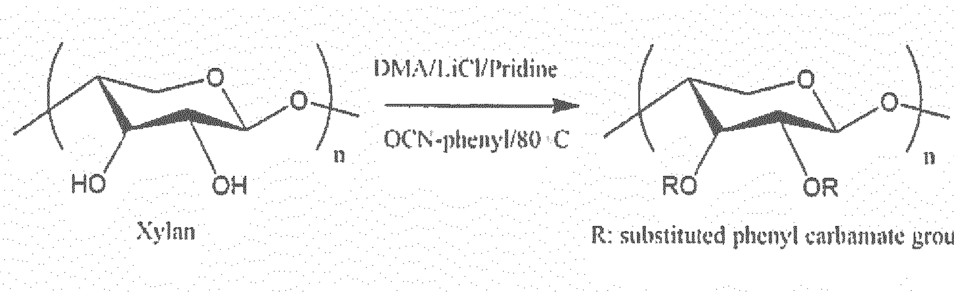


A 1H-NMR spectrum of the obtained xylan-phenyl carbamate derivative is shown in Fig. 1. The 1H-NMR spectrum (500 MHz) was obtained using a Brucker-500 Spectrometer (available from Brucker, USA) .

[C5]

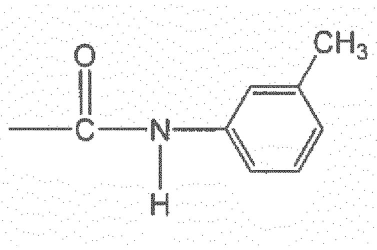
(1)

Table 1 shows results obtained from thermogravimetric analysis of a xylan-phenyl carbamate derivative substituted with substituted phenyl carbamate groups represented by formula (1).

[Table 1]

| | | | |
|---|---|---|---|
| Measured value | C%: 64.47 | H%: 6.59 | N%: 6.54 |
| Theoretical value | C%: 64.25 | H%: 6.54 | N%: 6.32 |

<Examples 2 to 7>

Xylan-phenyl carbamate derivatives (b) to (g), into which substituted phenyl carbamate groups represented by formulae (2) to (7) below were introduced, were obtained using the same procedure as that used in Example 1, except that phenylisocyanates having different substituent groups were used. Examples 3, 4, 5 and 6 are not according to present invention.

[C6]

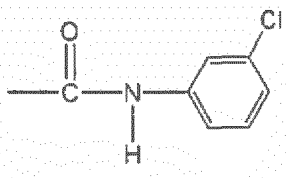
(2)

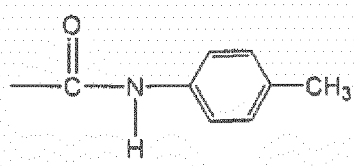
(5)

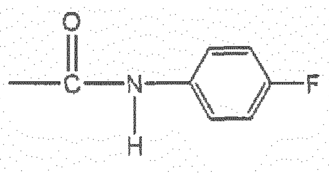 (5) 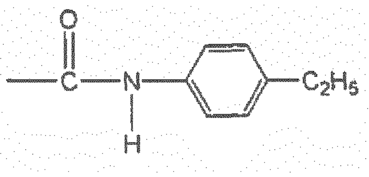 (6)

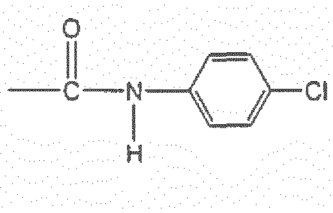 (4) 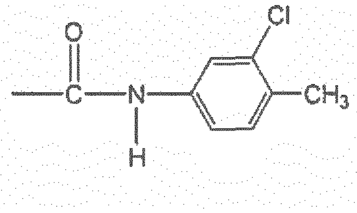 (7)

<Comparative Examples 1 to 4>

Xylan-phenyl carbamate derivatives (h) to (k) of Comparative Examples 1 to 4, into which substituted phenyl carbamate groups represented by formulae (8) to (12) below were introduced, were obtained using the same procedure as that used in Example 1, except that phenylisocyanates having different substituent groups were used.
[C7]

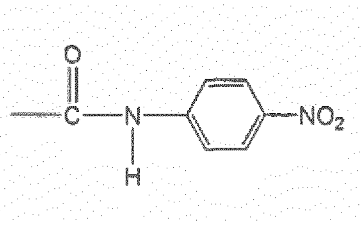 (8) 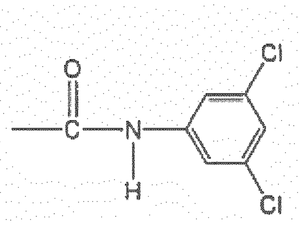 (10)

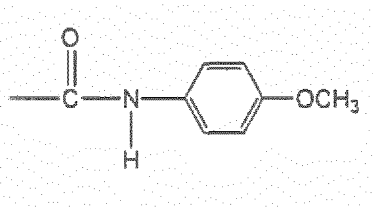 (9) 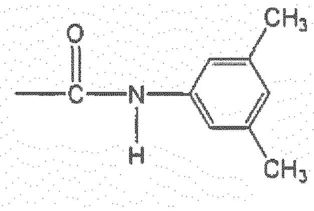 (11)

$^1$H NMR data (DMSO-d6, 80°C) for the xylan-phenyl carbamate derivatives produced in the examples and comparative examples are given below. Xylan-phenyl carbamate derivatives (j) and (k) are publicly known, and data for these are therefore omitted.

(b): $^1$H NMR (DMSO-d6): δ3.1-5.7 (glucose protons, 6H), 6.6-7.9 (aromatic, 8H), 9.2-10.1 (NH, 2H).
(c): $^1$H NMR (DMSO-d6): 83.2-5.3 (glucose protons, 6H), 6.6-7.7 (aromatic, 8H), 9.0-9.8 (NH, 2H).
(d) : $^1$H NMR (DMSO-d6): 83.1-5.2 (glucose protons, 6H), 6,9-7.8 (aromatic, 8H), 9.1-9.9 (NH, 2H).
(e) : $^1$H NMR (DMSO-d6): δ1.8-2.5 ($CH_3$, 6H), 3.1-5.3 (glucose protons, 6H), 6.6-7.6 (aromatic, 8H), 8.7-9.6 (NH, 2H).
(f): $^1$H NMR (DMSO-d6) : δ0.7-1.4 ($CH_3$, 6H), 2.1-2.7 ($CH_2$, 4H), 3.1-5,4 (glucose protons, 6H), 6.6-7.8 (aromatic, 8H), 8.7-9.8 (NH, 2H).
(g) : $^1$H NMR (DMSO-d6) : δ1.9-2.4 ($CH_3$, 6H), 3.1-5,3 (glucose protons, 6H), 6.8-7,9 (aromatic, 6H) 9.1-10.0 (NH, 2H).
(h): $^1$H NMR (DMSO-d6): δ3.1-5.6 (glucose protons, 6H), 7.2-8.5 (aromatic, 8H), 9.7-10.5 (NH, 2H).
(i) : $^1$H NMR (DMSO-d6) : δ3.4-4.0 ($CH_3$, 6H), 3.1-5.2 (glucose protons, 6H), 6.3-7.5 (aromatic, 8H), 8.6-9.4 (NH, 2H).

<Preparation of separating agents for optical isomers, and production of analytical columns>

Separating agent for optical isomers-1 was obtained by completely dissolving 0.35 g of xylan-phenyl carbamate derivative (a) prepared in Example 1 in 8 mL of tetrahydrofuran, and then coating the obtained solution on the surface

of 1.40 g of silica gel (average particle diameter 7 μm, average pore diameter 100 nm) that had been surface treated in advance with aminopropyltriethoxysilane.

Column-1 was obtained by packing separating agent for optical isomers-1 in a stainless steel column (25 cm × 0.20 cm i.d.) using a slurry method.

The number of theoretical plates in column-1 was 1500 to 3000 when using benzene as a reference, using a mixture of hexane/2-propanol (90/10, v/v) as an eluant and setting the flow rate to 0.1 mL/min.

The dead time ($t_0$) was measured using 1,3,5-tri-tert-butylbenzene as a non-retentive substance.

A JASCO PU-2089 chromatograph equipped with a UV/Vis (Jasco UV-2070) and a circular dichroism detector (JASCO CD-2095) was used as the HPLC apparatus.

A sample (a 2 mg/mL solution of a racemate) was injected into the chromatograph system using an Intelligent sampler (JASCO AS-2055) .

Fig. 2 shows a chromatogram obtained by separating a racemate having the following structure.

[C8]

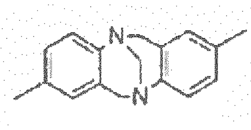

Separating agents for optical isomers-2 to -11 were obtained in the same way as separating agent for optical isomers-1 using xylan-phenyl carbamate derivatives (b) to (k) obtained in Examples 2 to 7 and Comparative Examples 1 to 4. In addition, these separating agents for optical isomers were packed in stainless steel columns in the same way as in Example 1.

Racemates 1 and 2 having the structures shown below were separated using columns packed with separating agents for optical isomers-1 to -11. When carrying out analysis using these columns, hexane/2-propanol (90/10, v/v) was used as an eluant, the flow rate was 0.1 mL/min, and the detection wavelength was 254 nm.

[C9]

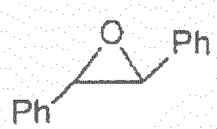

1

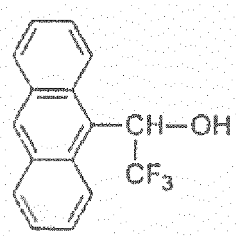

2

Tables 2 and 3 show results obtained by separating racemates 1 and 2 using the columns.

The asymmetry identification ability (separation coefficient α) of the compounds shown in the tables was calculated from the retention coefficient ($k_1$') in the manner shown below.

In addition, Fig. 3 shows chromatograms obtained by separating racemate 1 by means of columns using the separating agents for optical isomers of Examples 2 and 4 and Comparative Example 3.

Retention coefficient ($k_1$')

$$k_1' = [(\text{enantiomer retention time}) - (\text{dead time})] / \text{dead time}$$

Separation coefficient (α)

$$\alpha = \text{(retention coefficient of more strongly retained enantiomer)} / \text{(retention coefficient of more weakly retained enantiomer)}$$

[Table 2]

| | Example 1 a: 3·$CH_3$ | | Example 2 b: 3-Cl | | Example 3 c:4-F | | Example 4 d: 4-Cl | | Example 5 e:4-$CH_3$ | | Example 6 f: 4-$C_2H_5$ | | Example 7 g:3-Cl-4-$CH_3$ | |
|---|---|---|---|---|---|---|---|---|---|---|---|---|---|---|
| Racemale | $k_1$' | α | $k_1$' | α | $k_1$' | α | $k_1$' | α | $k_1$' | α | $k_1$' | α | $k_1$' | α |
| 1 | 0.32(+) | 1.38 | 0.40(+) | 1.35 | 0.37(+) | 1.36 | 0.39(+) | 1.25 | 0.36(+) | 1.46 | 0.33(+) | 1.46 | 0.31(+) | 1.29 |
| 2 | 1.30(-) | 1.62 | 0.88(-) | 1.4 | 1.24(-) | 1.51 | 0.94(-) | 1.31 | 1.99(-) | 1.44 | 1.71(-) | 1.61 | 1.02(-) | 1.37 |

*In the table, the symbols in parentheses indicate the optical rotation at 254 nm of the initially eluted enantiomer.

[Table 3]

| | Comp. Ex. 1 h: 4-$NO_2$ | | Comp. Ex. 2 i: 4-$OCH_3$ | | Comp. Ex. 3 j: (3,5-$Cl_2$) | | Comp. Ex. 4 k: 3,5-$(CH_3)_2$ | |
|---|---|---|---|---|---|---|---|---|
| Racemate | $k_1$' | α | $k_1$' | α | $k_1$' | α | $k_1$' | α |
| 1 | 0.35(+) | 1.15 | 0.48(+) | 1.22 | 0.51(+) | 1.19 | 0.47(+) | 1.40 |
| 2 | 1.08 | 1.0 | 2.94 | 1.0 | 0.45(-) | 1.23 | 1.44(-) | 1.42 |

*In the table, the symbols in parentheses indicate the optical rotation at 254 nm of the initially eluted enantiomer.

From the results in Tables 2 and 3, it was understood that separating agents for optical isomers of Examples 1 to 6, which had non-polar substituent groups, exhibited higher separation coefficients for racemates 1 and 2 than Comparative Examples 1 and 2, which had polar substituent groups.

In view of the separation results for racemate 2 in Table 2 and Table 3, Examples 1 and 5, in which only 1 methyl group was substituted, exhibited higher separation coefficients than Comparative Example 4, in which 2 methyl groups were substituted.

In addition, Example 6, in which the para position was substituted with an ethyl group, exhibited similar separative ability to Examples 1 and 5 for racemates 1 and 2.

Among the separating agents for optical isomers in Table 2 and Table 3, comparing those in which the phenyl group was substituted with chlorine showed that the separation coefficient for racemates 1 and 2 was such that Example 2 in which one meta position was substituted with chlorine > Example 4 in which the para position was substituted with chlorine > Example 7 in which a meta position was substituted with chlorine and the para position was substituted with a methyl group > Comparative Example 3 in which two meta positions were substituted with chlorine.

Comparing Examples 1 and 5 with Examples 2 and 4 in Table 2, it was understood that compounds in which meta positions of the phenyl group were substituted exhibited better separative ability of racemates 1 and 2.

In addition, comparing Example 2 and Example 1 in Table 2 and comparing Comparative Example 3 and Comparative Example 4 in Table 3, it was understood that compounds having a methyl group, which is an electron-donating group, exhibited better separative ability of racemates 1 and 2 than compounds having chlorine, which is an electron-withdrawing group.

[Industrial Applicability]

According to the present invention, it is possible to provide a separating agent for optical isomers, which uses a xylan-phenyl carbamate derivative and which exhibits better separative ability for specific racemates than xylan-phenyl carbamate derivatives in which hydroxyl groups in xylan are substituted with phenyl carbamate groups substituted with chlorine atoms or methyl groups at the 3- and 5- positions of the phenyl group.

## Claims

1. A separating agent for optical isomers, comprising a carrier, and a xylan-phenyl carbamate derivative in which hydroxyl groups in the xylan are substituted with groups represented by formula (I)or formula (II) below:

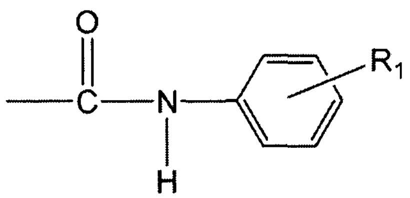

(I)

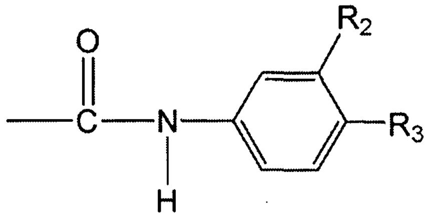

(II)

in formula (I), $R_1$ is a halogen or an alkyl group having 1 to 5 carbon atoms, and the $R_1$ substitution position is a meta position; in formula (II), $R_2$ and $R_3$ are each independently a halogen or an alkyl group having 1 to 5 carbon atoms, and $R_2$ and $R_3$ are different from each other.

2. The separating agent for optical isomers according to claim 1, wherein the groups that substitute the hydroxyl groups in the xylan are groups represented by formula (I), and $R_1$ is an alkyl group having 1 to 5 carbon atoms.

3. The separating agent for optical isomers according to claim 2, wherein $R_1$ is a methyl group or an ethyl group.

4. The separating agent for optical isomers according to claim 1, wherein the groups that substitute the hydroxyl groups in the xylan are groups represented by formula (II), and in formula (II), $R_2$ is a halogen and $R_3$ is an alkyl group having 1 to 5 carbon atoms.

5. The separating agent for optical isomers according to claim 4, wherein $R_2$ is chlorine and $R_3$ is a methyl group or an ethyl group.

6. The separating agent for optical isomers according to any one of claims 1 to 5, wherein the carrier is silica gel.

**Patentansprüche**

1. Trennmittel für optische Isomere, umfassend einen Träger und ein Xylan-Phenylcarbamat-Derivat, in welchem Hydroxylgruppen im Xylan durch Gruppen substituiert sind, die durch die nachstehende Formel (I) oder Formel (II) dargestellt sind:

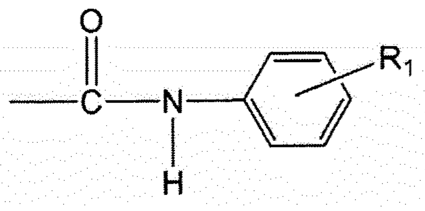

(I)

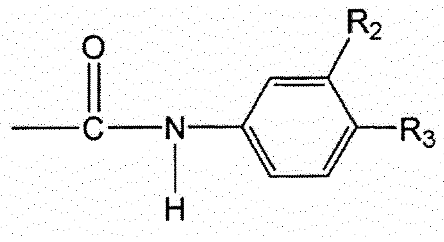

(II)

in Formel (I) ist $R_1$ ein Halogen oder eine Alkylgruppe mit 1 bis 5 Kohlenstoffatomen, und die $R_1$-Substitutionsposition ist eine Metaposition; in Formel (II) sind $R_2$ und $R_3$ jeweils unabhängig voneinander ein Halogen oder eine Alkylgruppe mit 1 bis 5 Kohlenstoffatomen, und $R_2$ und $R_3$ sind voneinander verschieden.

2. Trennmittel für optische Isomere gemäß Anspruch 1, wobei die Gruppen, welche die Hydroxylgruppen im Xylan substituieren, Gruppen sind, die durch Formel (I) dargestellt sind, und $R_1$ eine Alkylgruppe mit 1 bis 5 Kohlenstoffatomen ist.

3. Trennmittel für optische Isomere gemäß Anspruch 2, wobei $R_1$ eine Methylgruppe oder eine Ethylgruppe ist.

4. Trennmittel für optische Isomere gemäß Anspruch 1, wobei die Gruppen, welche die Hydroxylgruppen im Xylan substituieren, Gruppen sind, die durch Formel (II) dargestellt sind, und in Formel (II) $R_2$ ein Halogen ist und $R_3$ eine Alkylgruppe mit 1 bis 5 Kohlenstoffatomen ist.

5. Trennmittel für optische Isomere gemäß Anspruch 4, wobei $R_2$ Chlor ist und $R_3$ eine Methylgruppe oder eine Ethylgruppe ist.

6. Trennmittel für optische Isomere gemäß einem der Ansprüche 1 bis 5, wobei der Träger Silicagel ist.

**Revendications**

1. Agent de séparation d'isomères optiques, comprenant un porteur et un dérivé carbamate de xylane-phényle dans lequel des groupes hydroxyle dans le xylane sont substitués par des groupes représentés par la formule (I) ou la formule (II) ci-dessous :

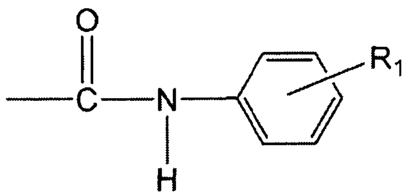

(I)

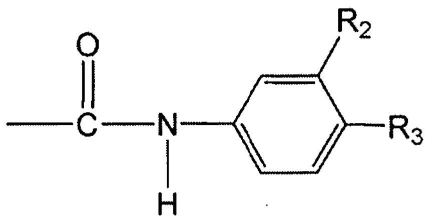

(II)

où dans la formule (I), $R_1$ est un halogène ou un groupe alkyle comportant de 1 à 5 atomes de carbone, et la position de substitution de $R_1$ est une position méta ; dans la formule (II), $R_2$ et $R_3$ sont chacun indépendamment un halogène ou un groupe alkyle comportant de 1 à 5 atomes de carbone, et $R_2$ et $R_3$ sont différents l'un de l'autre.

2. Agent de séparation d'isomères optiques selon la revendication 1, dans lequel les groupes qui substituent les groupes hydroxyle dans le xylane sont des groupes représentés par la formule (I), et $R_1$ est un groupe alkyle comportant de 1 à 5 atomes de carbone.

3. Agent de séparation d'isomères optiques selon la revendication 2, dans lequel $R_1$ est un groupe méthyle ou un groupe éthyle.

4. Agent de séparation d'isomères optiques selon la revendication 1, dans lequel les groupes qui substituent les groupes hydroxyle dans le xylane sont des groupes représentés par la formule (II), et dans la formule (II), $R_2$ est un halogène et $R_3$ est un groupe alkyle comportant entre 1 et 5 atomes de carbone.

5. Agent de séparation d'isomères optiques selon la revendication 4, dans lequel $R_2$ est un atome de chlore et $R_3$ est un groupe méthyle ou un groupe éthyle.

6. Agent de séparation d'isomères optiques selon l'une quelconque des revendications 1 à 5, dans lequel le porteur est du gel de silice.

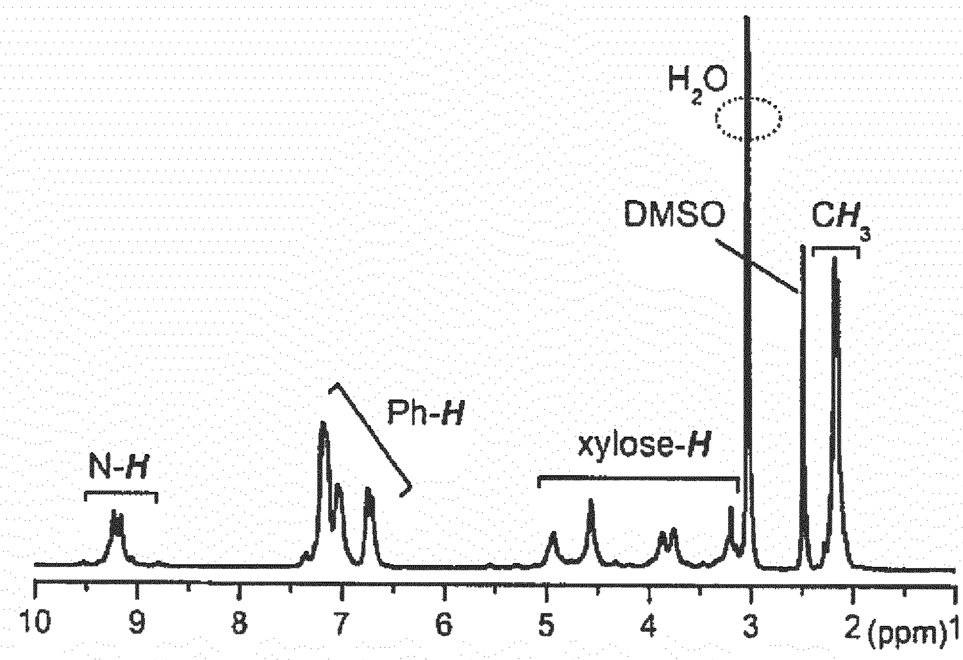


Fig.1

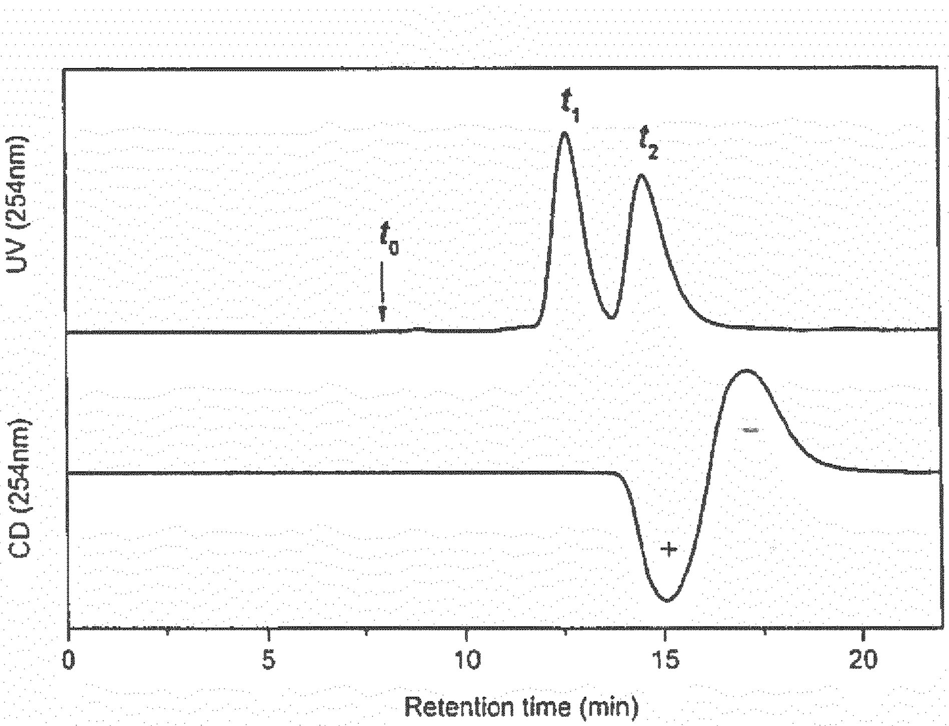


Fig.2

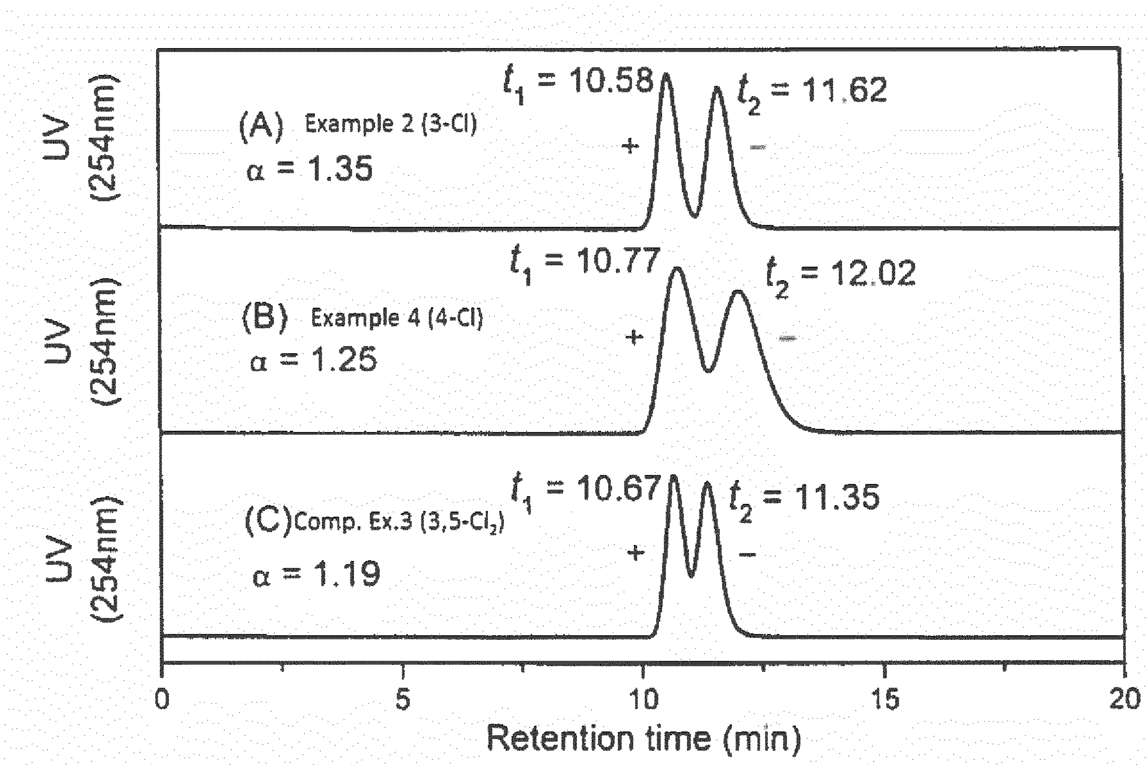
UV (254nm)
(A) Example 2 (3-Cl)
α = 1.35
$t_1$ = 10.58
$t_2$ = 11.62
+
−
UV (254nm)
(B) Example 4 (4-Cl)
α = 1.25
$t_1$ = 10.77
$t_2$ = 12.02
+
−
UV (254nm)
(C) Comp. Ex.3 (3,5-Cl$_2$)
α = 1.19
$t_1$ = 10.67
$t_2$ = 11.35
+
−
0
5
10
15
20
Retention time (min)

Fig.3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S63178101 B
- WO 2015004686 A
- JP 3148032 B
- JP H0381262 A


### Non-patent literature cited in the description


- **Y. OKAMOTO et al.** *Reactive & Functional Polymers,* 1998, vol. 37, 183-188